# EUROPEAN PATENT APPLICATION

(11) **EP 2 273 629 A1**
(43) Date of publication of application: **12.01.2011**
(21) Application number: 09733460.1
(22) Date of filing: 16.04.2009
(51) Int. Cl.: H01S 3/0915

(54) **LASER OSCILLATOR**

(30) Priority: 17.04.2008 JP 2008107782
(71) Applicant: Electra Holdings Co., Ltd., Chiyoda-ku Tokyo 100-0006 (JP); Yoshida, Kunio, Neyagawa-shi Osaka 572-0825 (JP)
(72) Inventor: YOSHIDA, Kunio, Neyagawa-shi Osaka 572-0825 (JP); YABE, Takashi, Tokyo 114-0013 (JP); UCHIDA, Shigeaki, Takarazuka-shi Hyogo 665-0847 (JP); OHKUBO, Tomomasa, Kawasaki-shi Kanagawa 211-0053 (JP); KATO, Kiyoshi, Chitose-shi, Hokkaido 0660027 (JP)
(74) Representative: Skone James, Robert Edmund
(86) International application number: PCT/JP2009/057671
(87) International publication number: WO 2009/128510

(57) **Abstract**

A laser oscillator for improving efficiency of conversion from solar rays to laser beams is provided.

The laser oscillator includes: a laser medium 31 excited by solar rays S to output laser beams; an output mirror 35 having a concave surface 35a opposed to an output end of the laser medium 31; and a light guide 20 having a reflector 22 extending from the output end of the laser medium 31 towards the outside of the laser medium 31 and reflecting the solar rays Sf to guide them to the laser medium 31.

## Description

### TECHNICAL FIELD

The present invention relates to a solar-pumped laser oscillator.

### BACKGROUND ART

In order to solve environmental problems on the earth, effective use of solar rays has been considered. One example is a solar-pumped laser oscillator. In order to improve the efficiency of the laser oscillator, it is necessary to prevent the thermal lens effect, thermal birefringence, etc. caused by a laser medium being heated by solar rays. For example, Patent Publication 1 discloses a solar direct-pumped laser oscillator having a laser rod including a laser oscillating medium for direct oscillation using solar rays as exciting light in order to properly control the laser rod thermally in the void of space. The laser rod has cooling means having a tube in which a coolant for absorbing thermal energy emitted from the laser rod main body is circulated.

### PRIOR ART DOCUMENT

### PATENT PUBLICATION

Patent publication 1: Japanese Patent Laid-open No. 2003-188441

### SUMMARY OF THE INVENTION

### PROBLEM TO BE SOLVED BY THE INVENTION

However, being different from the void of space, on the ground, the intensity of solar rays changes when they are shielded by clouds or according to seasons. Therefore, there have not been enough studies conducted for improving efficiency of conversion from solar rays to laser beams on the ground.

The present invention is made for solving the above problem and its object is to provide a laser oscillator which further improves the efficiency of conversion from solar rays to laser beams.

### MEANS FOR SOLVING THE PROBLEM

In order to solve the above problem, according to the invention as claimed in claim 1, there are provided: a laser medium excited by solar rays and outputting laser beams; an output mirror having a concave surface opposed an output end of the laser medium; and a light guide having a reflector extending from the output end of the laser medium towards the outside of the laser medium and reflecting the solar rays to guide them to the laser medium.

Further, according to the invention as claimed in claim 2, in the laser oscillator of claim 1, the reflector of the light guide has a conical surface.

Still further, according to the invention as claimed in claim 3, in the laser oscillator of claim 1 or 2, the laser medium has an opening which extends in a direction of an optical axis of the laser medium.

Still further, according to the invention as claimed in claim 4, in the laser oscillator of any one of claims 1 to 3, there is provided light collecting means for collecting the solar rays and allowing them to enter the light guide.

Still further, according to the invention as claimed in claim 5, in the laser oscillator of claim 4, the optical axis of the light collecting means is arranged in an inclined manner with respect to the optical axis of the laser medium.

Still further, according to the invention as claimed in claim 6, in the laser oscillator of claim 5, a surface of an entrance window of the light guide for taking in the solar rays is arranged perpendicularly to the optical axis of the light collecting means.

Still further, according to the invention as claimed in claim 7, in the laser oscillator of any one of claims 4 to 6, the light collecting means is a Fresnel lens and a fluorescent material is added to the Fresnel lens.

Still further, according to the invention as claimed in claim 8, in the laser oscillator of claim 7, the surface quality of the Fresnel lens is treated by deep ultraviolet light.

Still further, according to the invention as claimed in claim 9, there is provided a laser medium is excited by solar rays and outputting laser beams, wherein the laser medium has an opening which extends in a direction of an optical axis of the laser medium.

Still further, according to the invention as claimed in claim 10, in the laser oscillator of claim 9, the opening has a slit.

Still further, according to the invention as claimed in claim 11, in the laser oscillator of claim 9 or 10, the laser medium is formed in a plate-like shape.

Still further, according to the invention as claimed in claim 12, the laser oscillator includes: a laser medium excited by solar rays and outputting laser beams; a light guide having a reflector extending from an output end of the laser medium towards the outside of the laser medium and reflecting the solar rays to guide them to the laser medium; and light collecting means collecting the solar rays and allowing them to enter the light guide, wherein an optical axis of the light collecting means is arranged in an inclined manner with respect to an optical axis of the laser medium.

### EFFECT OF THE INVENTION

According to the present invention, there are provided: a laser medium excited by the solar rays and outputting laser beams; an output mirror having a concave surface opposed to an output end of the laser medium; and a light guide having a reflector which extends from the output end of the laser medium towards the outside of the laser medium and reflecting the solar rays to guide them to the laser medium. Therefore, a mode volume near the output end of the laser medium increases and solar rays from the light guide gather there. Thus, a laser oscillator which can further improve the efficiency of conversion from solar rays to laser beams can be provided.

### BRIEF DESCRIPTION OF THE DRAWINGS

Fig. 1 is a schematic diagram showing an example of the general configuration of a laser oscillator according to a first embodiment of the present invention.
Fig. 2 is a plan view showing a Fresnel lens of Fig. 1.
Fig. 3 is a schematic diagram showing how light collection is performed by the Fresnel lens of Fig. 1.
Fig. 4 is a schematic diagram showing a light guide and a laser cavity of Fig. 1.
Fig. 5 is a schematic diagram showing how light collection is performed in the light guide of Fig. 1 in which Fig. 5(A) shows a case where light is reflected near an end face of a reflector and Fig. 5(B) shows a case where light is reflected at an inner portion of the reflector.
Fig. 6 is a schematic diagram showing a mode volume and an intensity distribution of the incident light in the laser medium of Fig. 1.
Fig. 7 is a schematic diagram showing patterns of solar rays collected by the Fresnel lens of Fig. 1.
Fig. 8 is a perspective view showing modifications of the light guide of Fig. 1.
Fig. 9 is a schematic diagram showing a manufacturing process of the modification of the light guide of Fig. 1.
Fig. 10 is a perspective view showing another modification of the light guide of Fig. 1.
Fig. 11 is a perspective view showing modifications of the laser medium of Fig. 1.
Fig. 12 is a schematic diagram showing an example of the general configurations of the light guide and the laser medium of the present embodiment.
Fig. 13 is a diagram showing laser output characteristics of the present embodiment.
Fig. 14 is an explanatory diagram showing performance comparison of the present embodiments and the prior art.
Fig. 15 is a schematic diagram showing an example of the general configuration of a laser oscillator according to a second embodiment of the present invention.
Fig. 16 is a schematic diagram showing a laser housing of Fig. 15.
Fig. 17 is a schematic diagram showing an example of the general configuration of a laser oscillator according to a third embodiment of the present invention.
Fig. 18 is a schematic diagram showing light paths in the light guide of Fig. 1.
Fig. 19 is a schematic diagram showing light paths in a case where the light guide of Fig. 9 is inclined.
Fig. 20 is a schematic diagram showing the relationship between the light paths of Fig. 19 and the laser medium.
Fig. 21 is a schematic diagram showing light paths in a modification of the light guide of Fig. 17.

### MODE FOR CARRYING OUT THE INVENTION

Next, with reference to the drawings, embodiments for carrying out the present invention will be described.

### (First Embodiment)

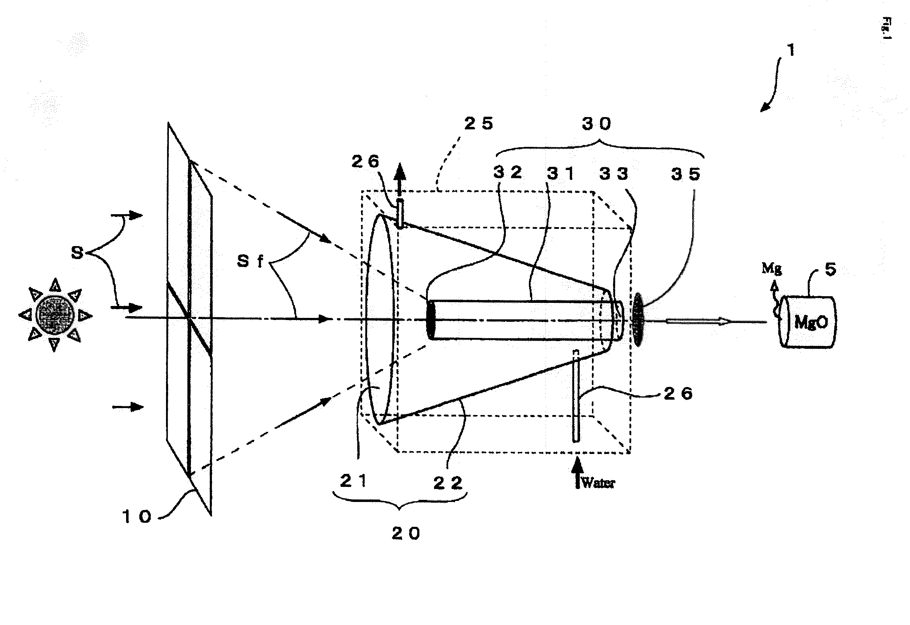

Now, with reference to Figs. 1 to 4, an explanation will be given of the general configuration and function of the laser oscillator according to a first embodiment of the present invention.

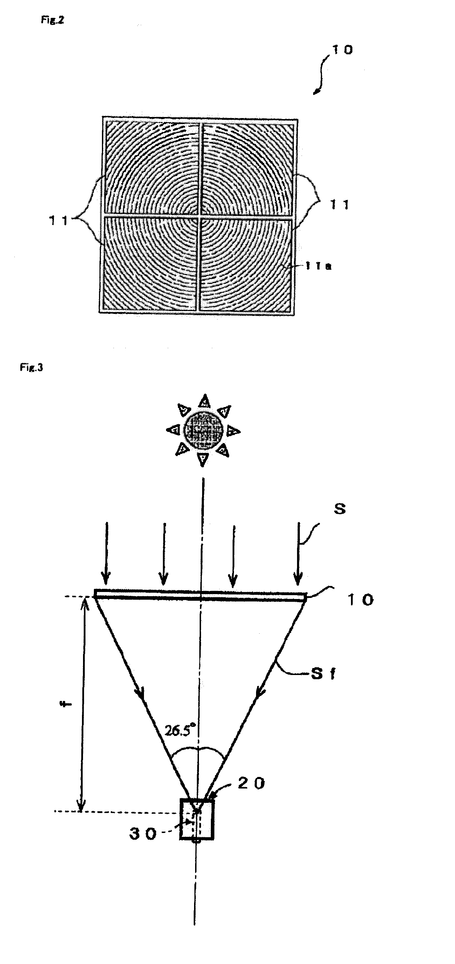

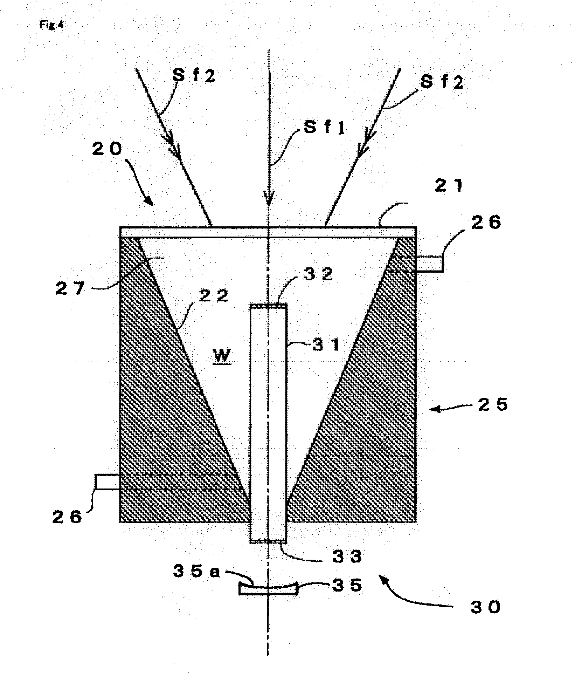

Fig. 1 is a schematic diagram showing an example of the general configuration of the laser oscillator according to the first embodiment of the present invention. Fig. 2 is a plan view showing a Fresnel lens to be used for the laser oscillator. Fig. 3 is a schematic diagram showing how light collection is performed by the Fresnel lens. Fig. 4 is a schematic diagram showing a light guide and a laser cavity of the laser oscillator.

As shown in Fig. 1, a solar-pumped laser oscillator 1 includes: a Fresnel lens 10 which collects solar rays S; a light guide 20 which guides the collected solar rays Sf as excitation light for a laser; a laser housing 25 which stores the light guide 20 therein; and a laser cavity 30 which resonates a laser beam. The laser oscillator 1 irradiates a generated laser beam to a target 5 of magnesium oxide (MgO), generates vapor of magnesium (Mg), and obtains magnesium from magnesium oxide.

As shown in Fig. 2, the Fresnel lens 10 is a Fresnel lens of four-division type which is constructed by combining four lenses 11 of 1 meter square. Since the Fresnel lens collects solar rays by a refraction method, grooves 11a as shown in Fig. 2 are formed in one side of the plastic. The grooves 11a are formed in a light outgoing face of the divided lens 11 so that a reflective loss may become small. Surfaces of the light incoming and outgoing sides of the divided lens 11 are treated by using an excimer lamp which emits light in a deep ultraviolet wavelength region so that a scattering loss may become several percent or less. Moreover, to the light incoming and outgoing faces of the divided lens 11, a dielectric optical thin film is vapor-deposited by using a patented technology of "Forming Method of Optical Thin Film" (Patent No. 3,905,035), and the reflectance is held down to several percent or less. Thus, quality of the surface of the Fresnel lens 10 is treated by the deep ultraviolet light. In addition, the number of the divided Fresnel lenses 10 is not limited to four. Further, the shape of the divided lens 11 is not limited to a square.
It serves the purpose if the effect of the Fresnel lens 10 is achieved by combining the divided lenses 11.

As shown in Fig. 3, the light guide 20 is arranged so that the area around the edge of the laser cavity 30 may be located in the position of the focus of the Fresnel lens 10 having a focal distance f. That is, the laser housing 25 which has a light guide 20 inside is provided. Then, the Fresnel lens 10 focuses solar rays S to the central part of the light guide 20 (central part of the laser housing 25). Moreover, the optical axis of the Fresnel lens 10 is parallel to the optical axis of the laser medium 31. Thus, the Fresnel lens 10 functions as an example of the light collecting means which collects solar rays S and allows the to enter the light guide 20.

Next, as shown in Fig. 4, the light guide 20 includes: a solar-ray entrance window 21 which allows the collected solar rays Sf to enter inside thereof; a reflector 22 for reflecting the solar rays Sf; and the laser housing 25 which accommodates the laser cavity 30.

The solar-ray entrance window 21 is arranged perpendicularly to the vertical incident light Sf1 which enters in parallel to the optical axis of the Fresnel lens 10. Thus, the surface of the entrance window of the light guide 20 which takes in solar rays Sf is arranged perpendicularly to the optical axis of the Fresnel lens 10.

A reflector 22 is formed so that it may become a cone surface, which is one example of a conical surface, on the inner side of the laser housing 25, and a bottom of the cone is on the side of the solar-ray entrance window 21. In order to prevent a fall in reflectance due to corrosion of the high reflectance metal film caused by cooling water, a dielectric multilayer film which does not absorb solar rays is vapor-deposited to the reflector 22. For example, as the reflector 22, a reflecting mirror in which a dielectric multilayer film is coated on an Al or Ag mirror with a waterproof thin film or a film of Al or Ag is used, and its reflectance is 95% or more. Thus, the light guide 20 has the reflector 22 which extends from an output end of a laser medium 31 towards the outside of the laser medium, reflects solar rays S, and guides them to the laser medium. In addition, the light collecting diameter of the solar rays Sf collected by the Fresnel lens 10 is as large as 50 mm Φ near the focus. Therefore, it is essential to provide the light guide 20. The light guide 20 is installed near the light collecting point of the Fresnel lens 10 and serves to guide the solar rays Sf collected by the Fresnel lens 10 to the laser cavity 30 with high efficiency.

Next, the laser housing (housing) 25 has a space 27 formed by the solar-ray entrance window 21 and the reflector 22, and the space 27 is filled with cooling water W. The laser housing 25 has a cooling water port 26 so that it is possible to supply the cooling water W from the outside and to discharge it to the space 27. The cooling water port 26 extends through the inner portion of the laser housing 25 to reach the space 27 so that it may provide communication between the outside and the space 27. Further, as materials for the laser housing 25, metals, plastics, glass, ceramics, etc. are used.

As shown in Figs. 1 and 4, the laser cavity 30 includes: a laser medium 31 which is excited by solar rays and outputs laser beams; a high-reflection film (HR) 32, which is an end portion of the laser medium 31 and is formed on a surface facing the solar-ray entrance window 21; an anti-reflection film (AR) 33 formed on a surface of an output end of the laser medium 31; and an output mirror 35 installed at a position opposite to the output end of the laser medium 31.

The materials of the laser medium 31 are solid-state laser crystals (or ceramics), such as YAG (Y₃Al₅O₁₂) and GSGG (Gd₃Ac₂Al₃O₁₂) to which both Nd and Cr are added, or YAG, GSGG, and GGG (Gd₃Ga₅O₁₂) to which Nd of high concentration is added. The laser medium 31 is in a shape of a stick (rod) with a circular cross section.

The high reflective film 32 has a dielectric multilayer film vapor-deposited thereto with high reflective function at an oscillation wavelength of the laser medium. For example, when a YAG crystal is used, a high reflective film (reflectance: 99% or more) for a wavelength of 1.064 µm is formed by vapor deposition. The high reflective film 32 reflects only the light of the wavelength 1.064 µm excited in the laser medium 31. Light of other wavelengths, that is, most of the solar rays entering through the solar-ray entrance window 21 passes through the high reflective film 32 and enters the laser medium 31.

The anti-reflection film 33 is formed by vapor-depositing an anti-reflection film for the wavelength of 1.064 µm (reflectance: 0.2% or less). The anti-reflection film 33 prevents a reflective loss within the laser cavity 30 and oscillation in other modes.

As shown in Fig. 4, the output mirror 35 has a concavity 35a which is opposed to the output end of the laser medium 31. The concave surface 35a of the output mirror 35 serves to compensate for thermal lens effects of the laser medium 31. The laser beam having grown in the laser cavity 30 is outputted to the outside from the output mirror 35. The output of the laser is greatly influenced by the radius of curvature and reflectance of the concave surface 35a of the output mirror 35. Therefore, the output mirror 35 is so configured as to be easily controlled.

The laser medium 31 is optically excited by solar rays Sf. The solar rays Sf having passed through the high reflective film 32 enters the inside of the laser medium 31, and excites the laser medium 31 (axial excitation). The solar rays Sf reflected on the reflector 22 of the light guide 20 enter the inside of the laser medium 31 from the side surface of the laser medium 31 to excite the laser medium 31 (side excitation).

Next, as an example of operation of the laser oscillator 1, light collection in the light path of the solar rays and the light guide will be explained with reference to drawings.

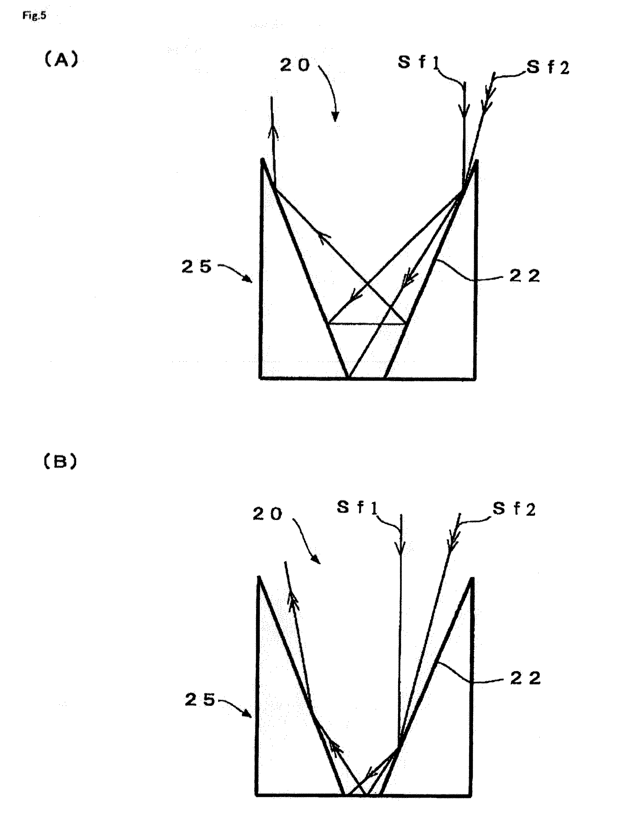

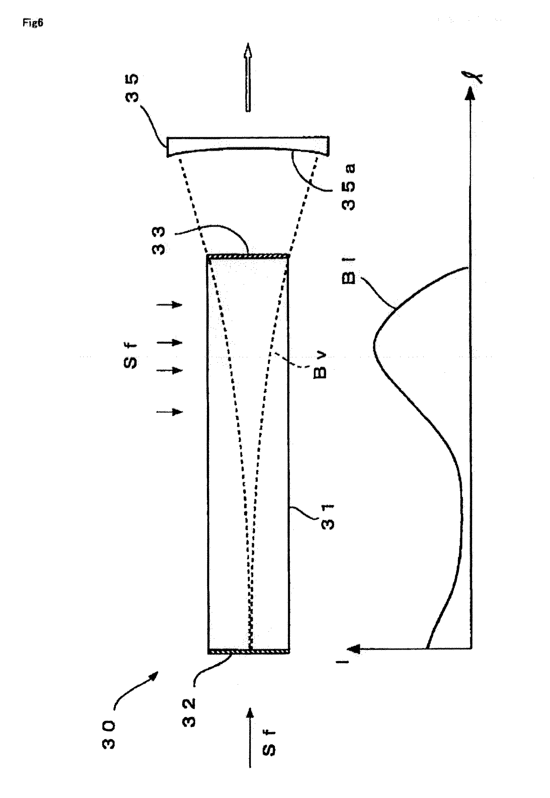

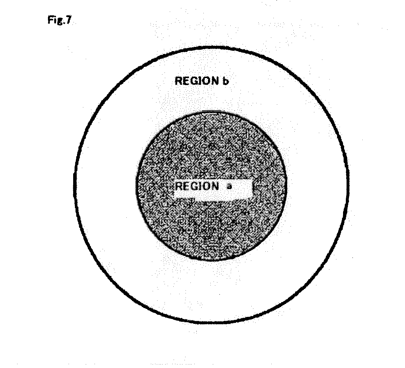

Fig. 5 is a schematic diagram showing how light collection is performed in the light guide 20 in which Fig. 5(A) shows a case where light is reflected near an end face of the reflector and Fig. 5(B) shows a case where light is reflected at an inner portion of the reflector. Fig. 6 is a schematic diagram showing a mode volume in the laser medium 31 and an intensity distribution of the incident light. Fig. 7 is a schematic diagram which shows the pattern of the solar rays collected by the Fresnel lens 10.

As shown in Fig. 1, solar rays S are collected by the Fresnel lens 10, pass through the solar-ray entrance window 21 as the solar rays Sf to enter the light guide 20. With respect to the collected incident light, the diameter of the solar rays Sf is reduced until it becomes almost equal to the diameter of the laser medium 31. The solar rays S enter the end portion in which the high reflective film 32 of the laser medium 31 is formed and excites the laser medium 31 in the axial direction. Other solar rays Sf are reflected on the reflector 22 of the light guide 20, enter the laser medium 31 from the side face of the laser medium 31 and excite the laser medium 31 from the side.

Next, the solar rays Sf reflected on the reflector 22 of the light guide 20 will be explained.

As shown in Fig. 5(A), of the solar rays Sf which entered near the end face of the reflector 22, both the first and second reflected light of the vertical incident light Sf1 which enters the solar-ray entrance window 21 or the end face of the laser medium 31 vertically gather, comparatively, at the bottom of the light guide 20 (near the output end of the laser medium 31). Moreover, by the first reflection, the light path of the oblique incident light Sf2 also reaches the bottom of the light guide. In addition, the oblique incident light Sf2 shown in Fig. 5 is one of the oblique incident light of various angles.

Next, as shown in Fig. 5(B), when the light is reflected on the reflector 22 near the bottom of the light guide 20, light paths of the vertical incident light Sf1 and oblique incident light Sf2 have reached the bottom of the light guide. As shown in Figs. 5(A) and 5(B), the solar rays reflected on the reflector 22 are liable to gather near the bottom of the light guide 20. Therefore, it is easier for the solar rays reflected on the reflector 22 to excite the peripheral part of the output end of the laser medium 31.

Next, a mode volume in the laser medium 31 and the intensity distribution of the incident light will be shown.

As shown in Fig. 6, when moving from the end portion where the high reflective film 32 of the laser medium 31 is provided to the end portion where the anti-reflection film 33 of the laser medium 31 is provided, the mode volume Bv increases. This is caused by a concave surface 35a of the output mirror 35 which compensates for thermal lens effects.

Moreover, as shown in Fig. 6, the laser medium 31 has, near the output end, a peak of intensity Bi at which an incident light enters the laser medium 31. This is, as shown by Figs. 5(A) and 5(B), caused by a configuration of the light guide 20 and because solar rays reflected on the reflector 22 are liable to gather near the bottom of the light guide 20. In particular, when the sun is covered with clouds or a haze occurs, etc., the image of the sun is faded and the solar rays are weakened. In such cases, the solar rays S cannot be sufficiently focused by the Fresnel lens 10 and the solar rays become liable to gather near the side face of the laser medium 31 and also the output end thereof. Thus, the mode volume is larger at the output end of the laser medium 31. Therefore, even when the light intensity of solar rays is weakened by clouds etc., it is possible for the laser oscillator 1 to improve the efficiency of conversion from solar rays to laser beams.

Moreover, in order to prevent the thermal destruction of the laser medium 31, thermal lens effects, and thermal birefringence, the cooling water W flows in from the cooling water port 26 at the output end of the laser medium 31 where the solar rays tend to gather. Accordingly, the cooling water W flows out from the cooling water port 26 of the solar-ray entrance window 21 to take the heat away.

In addition, as shown in Fig. 7, the solar rays Sf having entered the light guide 20 is roughly divided into a component of Region "a" (light collection region of parallel light) where light of a component having entered the Fresnel lens 10 is collected as parallel light and Region "b" (light collection region of scattered light) where light is scattered while advancing in the air and its components whose scattering angles are large are collected. Therefore, the solar rays in Region "b" are reflected about three times at most on the inner surface of the light guide 20 and enter the laser cavity 30. In addition, on a fine day etc. when there is no wind, most part of the solar rays become Region "a". On the other hand, on a day etc. when there is much water vapor in the air, the solar rays in Region "b" increase.

Thus, according to the present embodiment, there is provided a laser oscillator 1, including: a laser medium 31 which is excited by solar rays Sf and outputs laser beams; an output mirror 35 having a concave surface 35a opposing the output end of the laser medium 31; and a light guide 20 which has a reflector 22 extending from the output end of the laser medium 31 towards the outside of the laser medium 31, reflects the solar rays Sf, and guides them to the laser medium 31. Thus, the mode volume increases near the output end of the laser medium 31 and the solar rays from the light guide 20 gather there. Therefore, the laser oscillator 1 which can further improve efficiency of conversion from the solar rays to the laser beams can be provided. In particular, even when the intensity of the solar rays is weakened by clouds etc., the efficiency of conversion from the solar rays to the laser beams can be improved by the laser oscillator 1. The laser oscillator 1 converts the solar rays to the laser beams. Therefore, it can be used for cases where metals are refine by processing metals or plastics or by heating oxide materials, such as a magnesium oxide, to a high temperature and deoxidizing them.

Moreover, when a Fresnel lens 10 is additionally provided, as an example of the light collecting means for collecting solar rays and allowing them to enter the light guide 20, the solar rays tend to gather in the laser medium 31, improving the efficiency of conversion to the laser beams. For example, when the area of the Fresnel lens 10 is 4 m², the power of 4 kW of solar rays can be used for excitation of the laser. Therefore, when the slot of the Fresnel lens is formed in the light incidence surface, the maximum angle of incidence becomes about 75°, and a reflective loss becomes larger. On the other hand, when the slot is formed in the light outgoing surface, the maximum light outgoing angle is about 45°. Therefore, a reflective loss is somewhat reduced. At least, the power of the solar rays which pass through the Fresnel lens is reduced by as much as about 30% due to the reflective loss, scattering loss, and absorptive loss. Moreover, the Fresnel lens 10 is in the shape of a square in consideration of the case when it is mounted to a lens holder. The maximum size of a divided lens 11 of one sheet is about 1 m because of difficulty in manufacturing and cost. Therefore, according to the present invention, a large-diameter Fresnel lens 10 is formed by a dividing method. Also, plastics are used as its material. Therefore, it is light-weighted, easy to install, and easy to allow it to follow the movement of the sun.

Moreover, when the surface of the solar-ray entrance window 21, which is an example of the light entrance window of the light guide 20, is arranged perpendicularly to the optical axis of the Fresnel lens 10, the reflective loss at the solar-ray entrance window 21 decreases.

Moreover, when the Fresnel lens 10 is manufactured by using plastics to which coloring matters, for example, fluorescent materials such as rhodamine 6G and DOTCI are added, it can prevent the plastics which is the material of the Fresnel lens from being deteriorated by the light in the ultraviolet wavelength region included in the solar rays. Further, it can improve the laser oscillation efficiency by converting this ultraviolet light to effective excitation light in the visible wavelength region. Moreover, when the surface quality of the Fresnel lens 10 is treated by the deep ultraviolet light, the scattering loss becomes several percent or less.

Further, it becomes possible to reduce the total loss of the solar rays which pass through the Fresnel lens 10 to at least 10% or less by forming a slot in the light outgoing surface of the Fresnel lens 10 and treating the surface quality by the deep ultraviolet light.

As described above, it is possible to realize a light collecting lens which is far superior to a conventional Fresnel lens by use of a dividing method in manufacturing the Fresnel lens, greatly increasing the lens transmittance by surface quality treatment, raising the laser oscillation efficiency by adding coloring matters to plastics being a Fresnel lens material, lengthening the life of the lens, etc.

In addition, for an excitation light source of a YAG laser, lamp sources such as a Kr arc lamp and a Xenon flash lamp, or a semiconductor laser (LD) are generally used. The excitation efficiency for obtaining a high output of hundreds of W or more by this YAG laser is about 5% at the maximum when using the lamp light source. When using LD, although it exhibits high efficiency because of the use of resonance absorption, the efficiency obtained is about 30% at the maximum. Therefore, in order to generate an output of 1 kW from the YAG laser, an electrical input of 20 kW is necessary to the lamp and an input of about 3.3 kW is necessary to LD.

In order to oscillate the YAG laser by a conventional exciting method, it requires quite a lot of input of electrical energy. In order to solve environmental problems on the earth, it is ideal to achieve laser oscillation by use of natural power sources not using electricity.

The laser oscillator 1 of the present embodiment can serve as a solid-state laser oscillator which oscillates through excitation by solar rays, which represent natural power sources. The energy of solar rays is 1 kW/m² and average daylight hours in Japan are about 4 hours/day. However, when looking at other countries in the world, there are quite a few countries having 8 hours/day of daylight hours. For this reason, putting the laser using solar rays as an excitation light source to practical use is considered to be very promising. In order to generate a laser output of 1 kW, when excitation efficiency is assumed to be 25%, solar rays of 4 kW are required. It is necessary for the light collecting Fresnel lens to have an area of 4 m². Accordingly, as a manufacturing technology for the Fresnel lens of a large dimension, the present embodiment solved this problem by using a divided-type Fresnel lens 10 configured by combining divided lenses 11.

Moreover, the spectrum of solar rays ranges widely from 300 nm to a near-infrared wavelength region. An absorption region of Nd ion which is a light generating source of an Nd: YAG laser is from 500 to 850 nm. Since the spectral intensity of this wavelength region is very large, it is excellent as a light source for excitation. However, there remains a problem of effectively utilizing the light of wavelength region 400 to 550 nm which do not contribute much to absorption of Nd ion. However, as in the laser oscillator 1 of the present embodiment, the oscillation efficiency of the laser can be about doubled by adding coloring matters rhodamine 6G or DOTCI to the lens material. The coloring matter rhodamine 6G is added to the laser medium, absorbs solar rays in the wavelength region of 400 to 550 nm which are hardly absorbed by trivalent Nd ion emitting a laser beam, and emits light in the absorption wavelength region 570 to 600 nm of the Nd ion. The coloring matter DOTCI absorbs solar rays in the wavelength region 400 to 700 nm and emits light in the absorption wavelength region 790 to 820 nm of the Nd ion.

Furthermore, a problem of guiding the solar rays collected by the Fresnel lens to the laser cavity with high efficiency was solved.

Moreover, the solar-pumped laser oscillator 1 used the Fresnel lens manufactured by using plastic or glass material for collecting solar rays. That is, the laser oscillator 1 is configured such that it collects solar rays through the Fresnel lens made of plastic or glass material and oscillates a solid-state laser.

Further, in the laser oscillator 1, anti-reflection films for preventing the reflection of solar rays are vapor-deposited to both sides of the Fresnel lens 10 for allowing the solar rays entering the laser medium to be maximum. That is, in the laser oscillator 1, anti-reflection films having small reflection loss even with respect to an oblique incident light are vapor-deposited to both sides of the Fresnel lens 10 for collecting solar rays and the laser oscillator 1 is configured such that the solar rays entering the laser medium is allowed to be maximum.

Moreover, the quality of the processed surface of the Fresnel lens 10 is treated by deep ultraviolet light (from wavelength 170 to 210 nm) such as an excimer lamp so that the scattering loss on the processed surface may be minimum. That is, the processed surface of the Fresnel lens 10 is treated by the deep ultraviolet light, and the scattering loss of the incident sunlight is minimized.

Moreover, in the laser oscillator 1, divided parts (two to six division) are combined to form one Fresnel lens for collecting solar rays. That is, in the laser oscillator 1, a large-diameter lens is formed by using divided-type Fresnel lenses and solar rays of the large output power are collected. Moreover, the laser oscillator 1 has a light guide 20 which guides the solar rays collected through the light collecting lens to the laser cavity 30 with high efficiency. Moreover, the laser cavity 30 is configured such that it enables a two-way excitation of both the axial direction and side surface or surface-direction excitation depending on the output of the laser light.

Next, a modification of the light guide which guides solar rays will be explained.

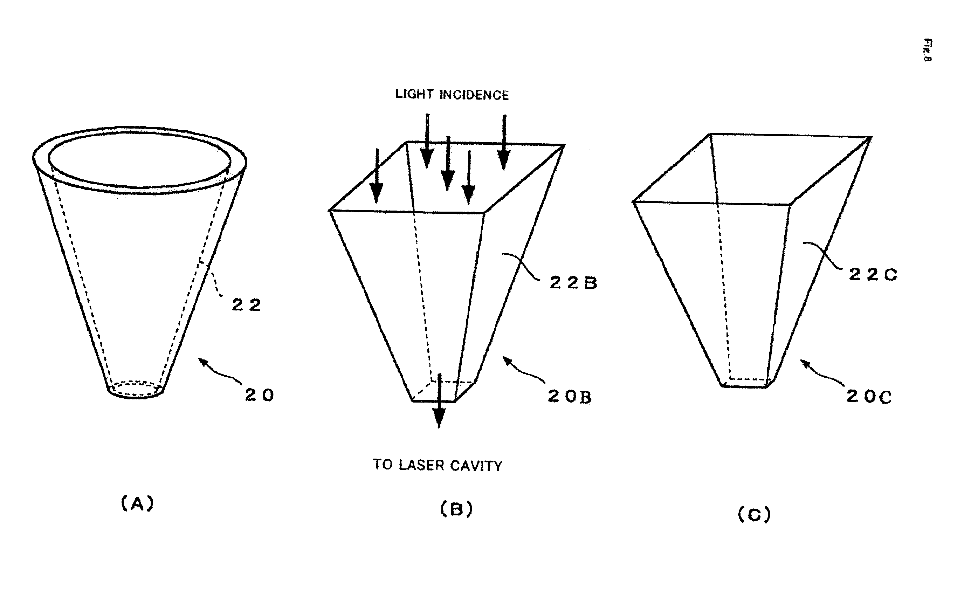

Fig. 8(A) shows an example of a cone type of the light guide 20 which guides solar rays. The diameter of a light incidence surface is about 50 mm Φ, and the dimension of the light outgoing surface depends on the size and shape of the laser medium. The length of the light guide is 4 to 20 cm. The reflector 22 is an inside light reflecting mirror. Fig. 8(B) shows an example of a pyramid type light guide 20B. The reflector 22B is an inside light reflecting mirror. Moreover, Fig. 8(C) shows a light guide 20C in which the laser medium is formed in the shape of a plate (slab). The reflector 22C is an inside light reflecting mirror.

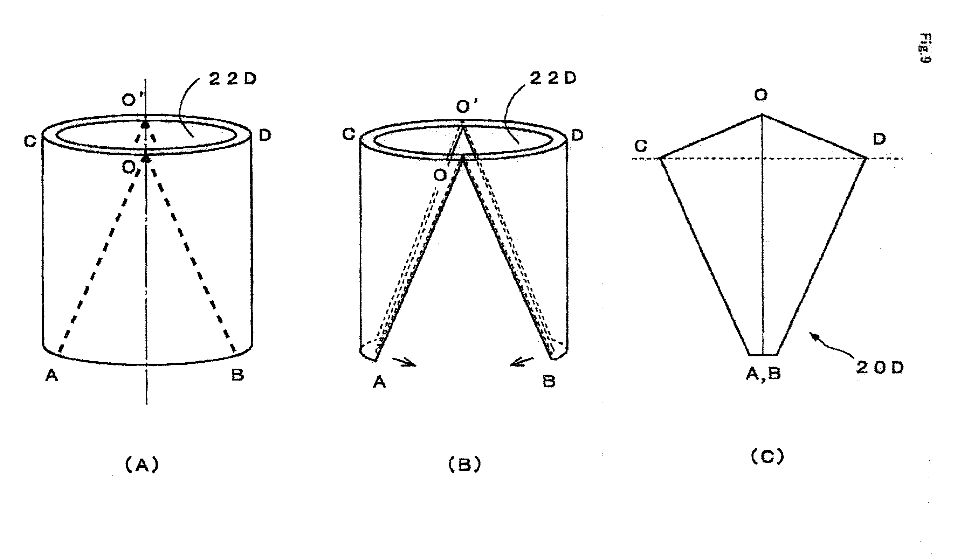

In addition to these, an elliptical cone-type light guide is also used. This light guide is for a slab-shaped laser medium. Fig. 9 is a schematic diagram showing a manufacturing process of the elliptical cone-type light guide 20D. As shown in Fig. 9(A), a material in the cylindrical shape (for example, quartz glass) is cut along a side OA and a side OB. That is, it is cut by a plane defined by points O, O', and A. Further, it is cut by a plane defined by points O, O', and B.

Next, as shown in Fig. 9(B), the portions such as a piece OAB etc. are removed. Then, as shown in Fig. 9(C), a face of OA and a face of OB are pasted up and cut along a face CD. A light guide 20D is made such that an inlet for solar rays Sf is circular and an outlet gradually becomes an ellipsoid form.

The outlet (output end of the laser medium) of the light guide 20D is in the shape of an ellipsoid. Therefore, the light beams tend to gather on a plane side of the slab-shaped laser medium. Therefore, the solar rays Sf which enter the laser medium increase. That is, the light guide is structured as an approximate elliptical cone so as to surround the slab-shaped laser medium to increase the absorption efficiency. Further, the solar rays Sf collected by the Fresnel lens 10 is circular at the light incidence part. Since the light guide 20D is also circular at the light incidence part, the solar rays Sf can enter the light guide 20D smoothly. The inner portion of the light guide 20D becomes an approximate elliptical cone. In a state where the light guide 20D is installed such that the optical axis of the laser medium 31 is horizontal to the optical axis of the Fresnel lens 10, even in the shape of the approximate elliptical cone, as in the light guide 20D of the conical shape, the solar rays Sf are brought together toward the output end of the laser medium 31. As described above, the light guides 20B, 20C, and 20D have reflectors 22B, 22C, and 22D that extend from the output ends of the laser medium 31 towards the outside of the laser medium 31, reflect the solar rays Sf, and guide them to the laser medium 31.

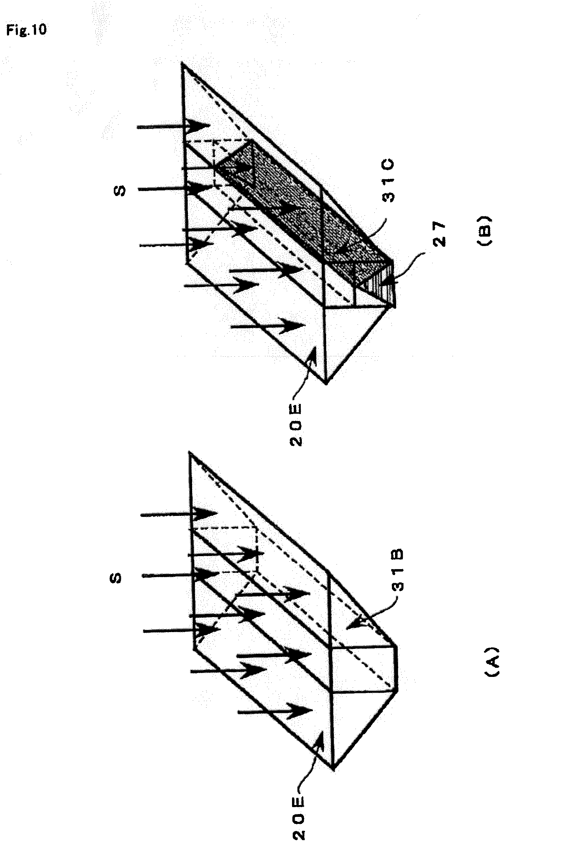

Now, another modification of the light guide will be described. Fig. 10 is a perspective view showing another modification (wing-type light guide) of the light guide 20. Fig. 10(A) is a perspective view showing a wing-type light guide used when the laser medium is narrow and thick, and Fig. 10(B) is a perspective view showing a wing-type light guide which is used when the laser medium is wide and thin.

A transparent optical material having almost the same refractive index as the laser medium 31B is used for the prism-type light guide 20E. When the laser medium 31B is YAG, an undoped YAG crystal to which no light-emitting element is added, ceramic YAG, and glass are used. The light guide 20E and the laser medium 31B are jointed by optical splicing or by adhesives with little absorption in the ultraviolet to near-infrared wavelength region.

An anti-reflection film is vapor-deposited to the light incidence surface of the light guide 20E so as to prevent the reflective loss and to prevent corrosion by guide water. Further, when the width of the laser medium is wide, as shown in Fig. 10(B), a reflecting mirror (wedge-shape folded mirror) 27 is used to excite the laser medium 31C from its lower portion. The present device is very advantageous for exciting the laser medium by using solar rays or a semiconductor laser with poor light focusing nature.

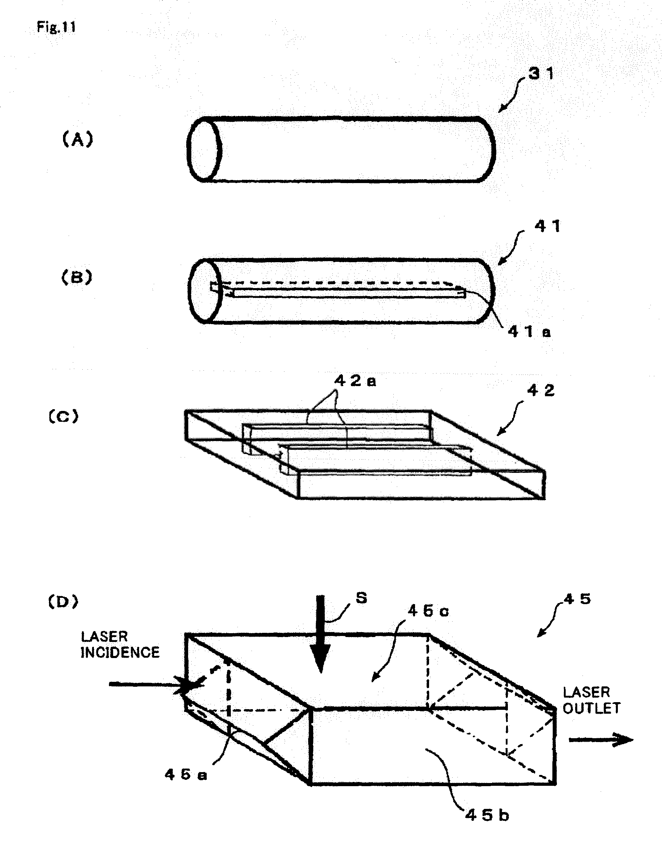

Next, modifications of the laser medium 31 will be described. Fig. 11 is a perspective view showing the modifications of the laser medium 31. As shown in Fig. 11(A), the laser medium 31 is a rod-type laser medium. As shown in Fig. 11(B), a laser medium 41 is a rod-type laser medium with a slot. As shown in Fig. 11(C), a laser medium 42 is a slab-type laser medium with a slot. As shown in Fig. 11(D), a laser medium 45 is a slab-type laser medium with a wedge.

As shown in Fig. 11, there are used a rod-type laser medium 31 and a slab-type laser medium. Further, for reducing thermal effects (such as the thermal lens and thermal birefringence) due to excitation light of the laser medium, there are used the rod-type laser medium 41 with a slot, slab-type laser medium 42 with a slot, and slab-type laser medium 45 with a wedge. Since these excitation methods have good cooling efficiency by use of cooling water W, they are suited to a large-output laser oscillator. Further, the slots of the laser medium with slots are, as shown in Figs. 11(B) and 11(C), through holes, namely, slits 41a and 42a.

As an example of an opening which extends in a direction of the optical axis of the laser medium, the laser medium 41 has a slit 41a. The width of the slit 41a of the laser medium 41 is about 1 mm.

Moreover, with respect to the laser medium 42, the laser medium is formed in a plate-like shape, and has a slit. 42a as an example of an opening which extends in a direction of the optical axis of the laser medium. The width of the laser medium 42 is 25 to 30 mm, and the width of the slit 42a is about 1 mm. Thus, the laser oscillator has a laser medium of a rod-type with a slot, a slab-type with a slot, or a slab-type with a wedge in order to reduce the thermal lens effects, thermal birefringence, etc. of the laser medium caused by absorption of the solar rays.

According to the above embodiments of the laser oscillator, the laser media 41 and 42 have openings extending in the optical axis direction of the laser medium, increasing the area in contact with the cooling water. Therefore, heat can easily be discharged from the laser medium, reducing thermal destruction, thermal birefringence, thermal lens effect, etc. and preventing parasitic (parasite) oscillation. Therefore, the laser media 41 and 42 are suitable for achieving higher output. In particular, in the cases where the slits 41a and 42a are used, the cooling water flows in the slits 41a and 42a. Therefore, the rise in temperature of the laser medium can efficiently be prevented. Moreover, the laser medium 45 has a wedge portion, which increases the surface area, making it easier to discharge heat.

Moreover, the laser medium 42 is formed in the plate-like shape. Therefore, when the light guide 20C or the approximate elliptical cone-shaped light guide 20D is installed to surround the laser medium 42, about 50% or more of the solar rays reflected once or twice on the reflectors 22C and 22D enters the laser medium 42, contributing to the laser oscillation. Therefore, since a uniform excitation is attained, the laser medium 42 is suited for outputting higher power.

Further, as an example of the opening which extends in the optical axis direction of the laser medium, the laser medium 42 has a slit 42a. Therefore, it oscillates not in zigzag but in a straight light path. Therefore, an opticalaxis adjustment (alignment) becomes easy. Further, when a laser beam is formed in the oscillator, there occurs mixing of neighboring laser beams with the slit 42a inbetween and a coherent oscillation is obtained. It is conceivable to arrange two or more laser media to increase the output of the laser. However, it is extremely difficult to adjust so as to gain a coherent oscillation.

### EXAMPLES

Next, examples of the present invention will be specifically described.

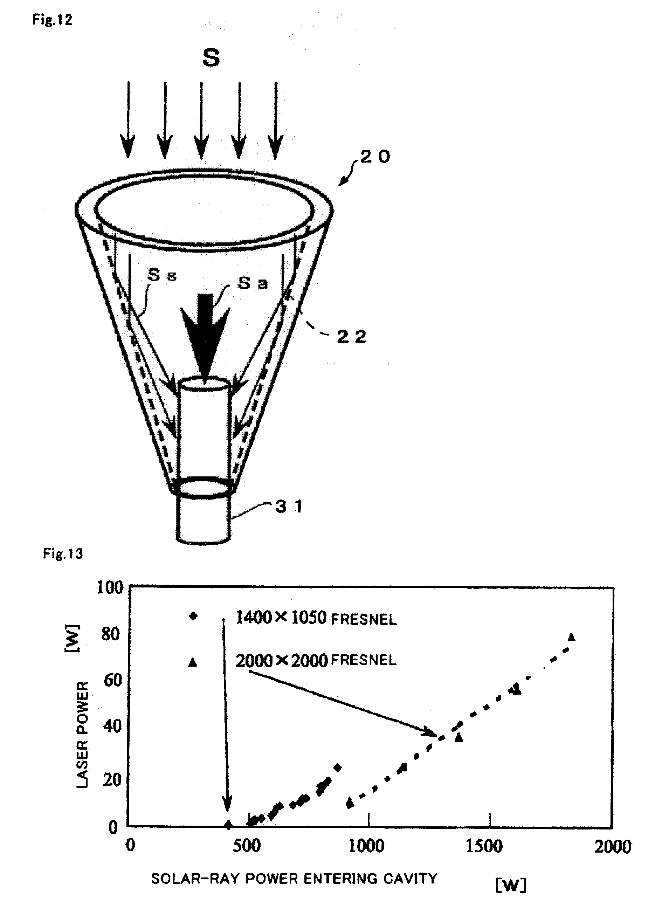

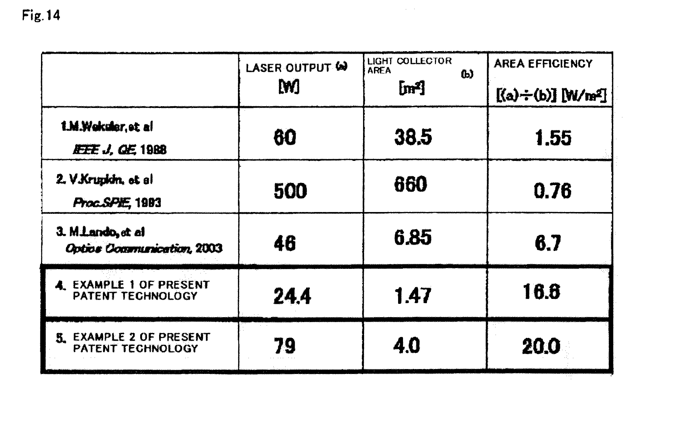

Fig. 12 is a schematic diagram showing a general construction of the light guide and laser medium of the present embodiment. In addition, the laser cavity containing the light guide 20 of Fig. 12 is a laser cavity for an axial and side excitation device, which allows the solar rays to enter from an axial direction and excites both the axial Sa and side excitations Ss. This excitation method is suited to a small-output laser oscillator. Fig. 13 is a diagram showing laser output characteristics of the present embodiment. Fig. 14 is an explanatory diagram showing performance comparison of the present embodiment and the prior art.

An oscillation experiment was conducted with use of the solar-pumped laser oscillator of Fig. 12 (the light guide 20 and the laser medium 31 alone are shown). As the Fresnel lens 10, a plastic lens having a dimension of 1,400 × 1,050 mm and a focal distance of 1.2 m was used. The both sides excitation method of axial and side excitation is used for the laser guide and the laser medium. The size of the laser medium 31 is 9 Φ × 1,001 mm (diameter: 9 mm, length: 100 mm), and a YAG rod to which Nd and Cr are added was used. A high-reflective film was vapor-deposited to a rod surface on the light entering side, and an anti-reflection film was vapor-deposited to the light outgoing surface. The reflectance and radius of curvature of the reflecting mirror (output mirror) on the light outgoing side is left variable. Then, the reflectance and radius of curvature of the reflecting mirror at which a maximum output is obtained is worked out in the experiment.

One example in Fig. 13 is a diagram showing a laser output characteristic (mark ◆) when the light was collected by a Fresnel lens of 1,400 mm × 1,050 mm. In this experiment, as marked by a square (mark ◆) in Fig. 13, a laser output of 24.4 W is attained by solar-ray input of 868 W. The reflectance and the radius of curvature of the output-power side reflecting mirror at this time was 95% and 38 cm, respectively. The excitation efficiency (laser output/solar-ray input) reached 2.8%, which is the best result as data so far announced.

The laser guide (light guide 20) and the laser medium 31 are arranged as in Fig. 12. The Fresnel lens 10 is made of plastics. The experiment was conducted by using a lens of 2 m × 2 m with a focal distance of 2 m, which is made, as shown in Fig. 2, by combining four lenses of 1 m × 1 m each of which is a quarter of a sector.

One example in Fig. 13 is a diagram showing a laser-output characteristic (mark ▲) when the light is collected by a Fresnel lens of 2,000 × 2,000 mm. In this experiment, as shown in Fig. 13 by a triangle (mark ▲), a laser output of 79 W was attained by solar-ray input of 1,835 W. The reflectance and the radius of curvature of the reflecting mirror on the output-power side at this time was 95% and 300 cm, respectively. The excitation efficiency (laser output/solar-ray input) reached 4.3% and, as data so far announced, the highest efficiency and the maximum output were attained. The present invention proved that the laser oscillation using solar rays is very promising.

Next, Fig. 14 shows comparison of the laser output per solar-ray collecting areas of various solar-pumped lasers so far reported. Of the performance of the solar-pumped laser device, the greater the laser power outputted to the area for collecting solar rays is, the higher the system use efficiency becomes. This index is important. Compared to the conventional solar-pumped laser technologies of 1 to 3, the area use efficiency of the device is improved by about three times to ten times, showing profitability of the present invention.

### (Second Embodiment)

Next, the laser oscillator according to a second embodiment of the present invention will be explained. First, with reference to drawings, a general configuration of the laser oscillator according to the second embodiment will be described. The same reference characters are given to the same or corresponding parts shown in the first embodiment, and different structures and operations alone will be explained. The same holds true of other embodiments and modifications.

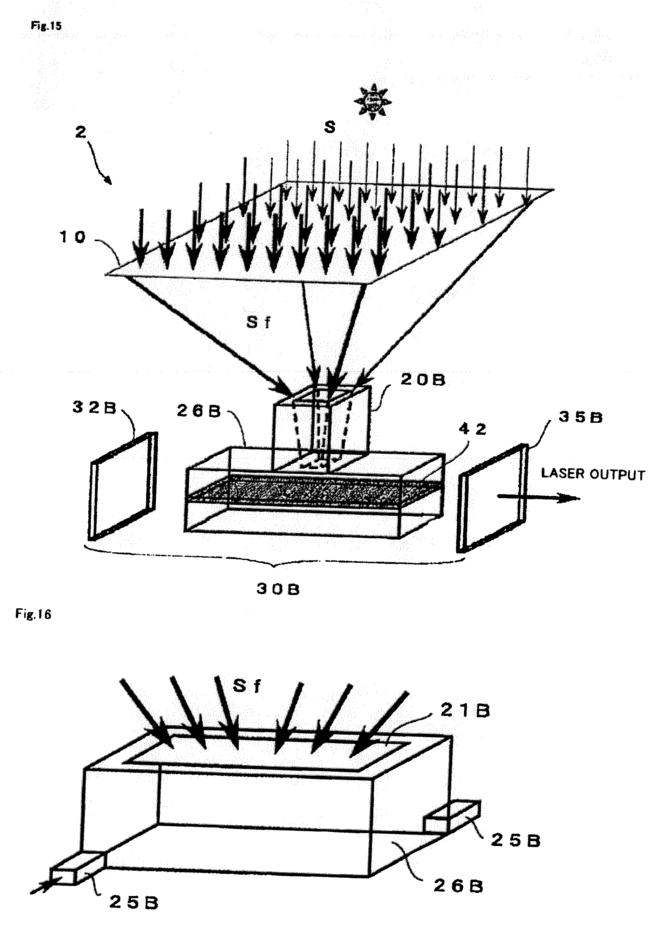

Fig. 15 is a schematic diagram showing an example of the general configuration of the laser oscillator according to the second embodiment of the present invention. Fig. 16 is a schematic diagram showing a laser housing of Fig.15.

As shown in Fig. 15, the solar-pumped laser oscillator (laser oscillation unit) 2 includes: a Fresnel lens 10 for collecting solar rays S: a light guide 20B for guiding the collected solar rays to a laser cavity with high efficiency; and the laser cavity 30B.

The laser cavity 30B includes: a high reflective mirror 32B; an output mirror 35B; and a laser medium 42 stored in a laser housing 25.

Next, Fig. 16 is a schematic diagram showing a laser housing which constitutes the laser cavity. The solar rays from the light guide 20B is led to the laser housing 25B through a solar-ray entrance window 21B and excites a laser medium in the laser housing 25B. The laser medium is cooled by the cooled pure water (temperature: 18 to 26°C). For the inner surface of the laser housing 25B, a high reflective member (aluminum metal, metal reflecting mirror, etc.) or a scattering member with little absorption is used. The laser medium mounted to the laser housing 25B is excited from the side.

### (Third Embodiment)

Next, with reference to drawings, a laser oscillator according to a third embodiment of the present invention will be explained.

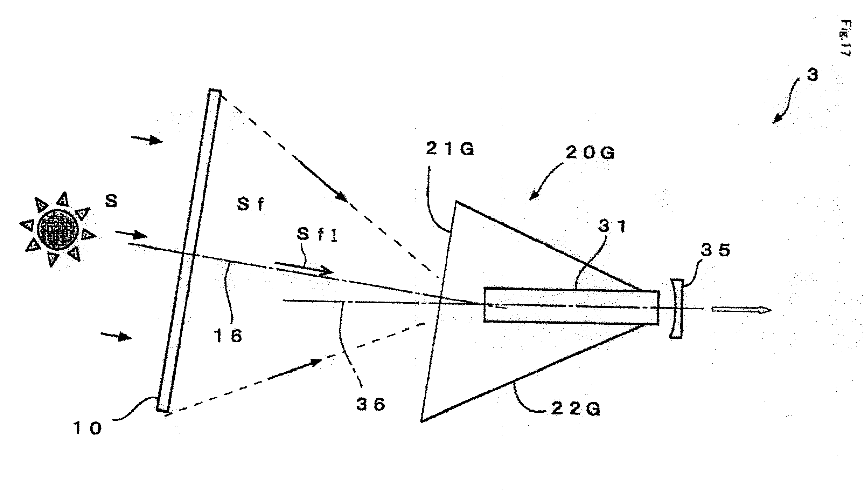

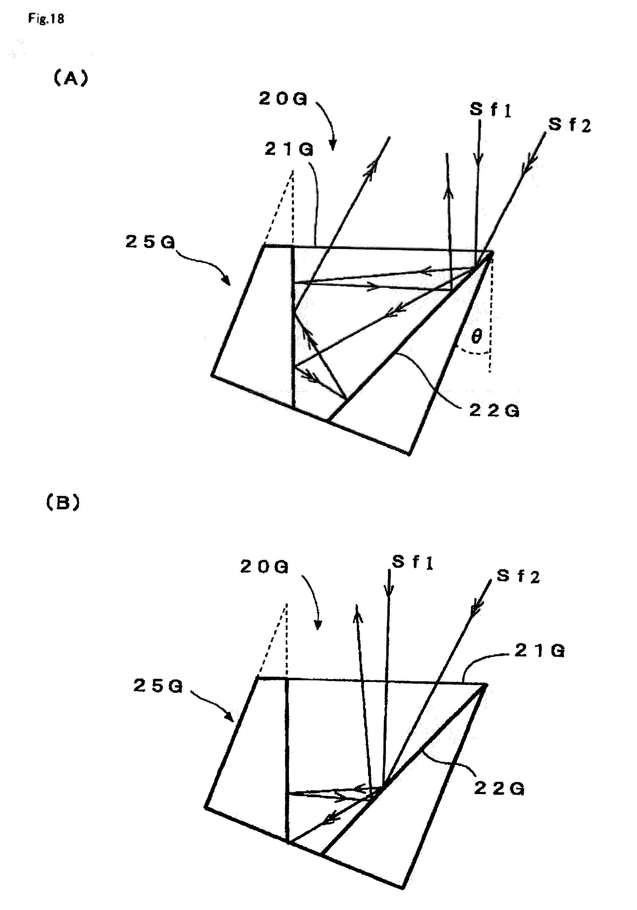

Fig. 17 is a schematic diagram showing an example of the general configuration of a laser oscillator according to the third embodiment of the present invention. Fig. 18 is a schematic diagram showing light paths in the light guide. Fig. 18(A) shows light paths of solar rays reflected near an end face of a reflector 22G. Fig. 18(B) shows light paths of solar rays reflected inside the reflector 22G.

First, with reference to the drawings, a general configuration of a laser oscillator 3 according to the third embodiment will be explained.
As shown in Fig. 17, the laser oscillator 3 differs from the first embodiment in that the light guide 20G and an optical axis 16 of the Fresnel lens 10 are provided in an inclined manner with respect to an optical axis 36 of the laser medium 31.

As shown in Figs. 17 and 18, the light guide 20G has a solar-ray entrance window 21G being perpendicularly provided with respect to the optical axis 16 of the Fresnel lens 10 and the reflector 22G. As shown in Fig. 18, the light guide 20G is in the shape as if it is cut along a plane of the solar-ray entrance window 21G. The reflector 22G is being a reflector 22G in such a manner that, with respect to the optical axis 16 of the Fresnel lens 10, the light guide 20G is inclined, namely, the optical axis 36 of the laser medium 31 is inclined by angle θ. Further, the angle of inclination θ is 15° to 25°. For example, in Fig. 18, it is 19.6°.

As shown in Fig. 18(A), the vertical incident light Sf1 having entered near an end portion of the reflector 22G of the light guide 20G is reflected several times on an upper portion of the light guide 20G and is returned in an incident direction. Further, the oblique incident light Sf2 entering near the end portion of the reflector 22G of the light guide 20G has once reached the inner portion of the light guide 20, reflected several times, and then returned in the incident direction. Further, solar rays Sf1 and Sf2 having entered near a central portion of a light incident port of the light guide 20G are reflected on a wall surface (reflector 22G) of the light guide 20G and are focused to the inner portion of the light guide 20G.

Thus, by inclining the light guide, the solar rays enter in an oblique manner with respect to the optical axis of the laser medium. Therefore, the solar rays are not likely to gather at an output end of the laser medium, which makes it possible to uniformly excite the laser medium and further to improve the efficiency of conversion from the solar rays to laser beams. Further, the laser output can be increased (efficiency can be further improved) by an increase in the number of reflection. Thus, it is possible to prevent thermal destruction of the laser medium, thermal birefringence, thermal lens, parasitic oscillation, etc., being capable of generating a high-quality laser beam having a favorable focusing nature.

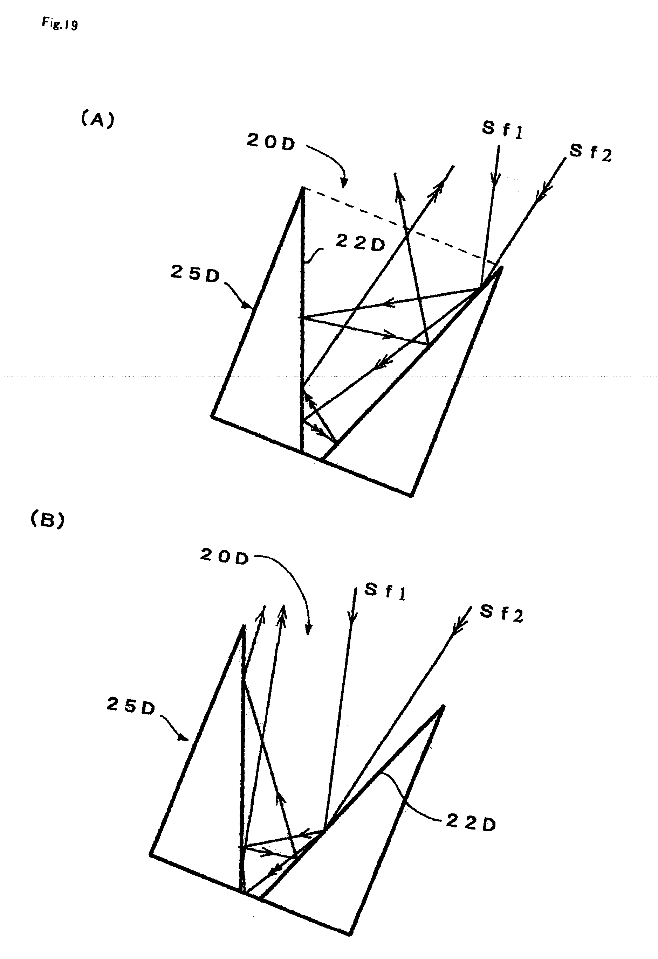

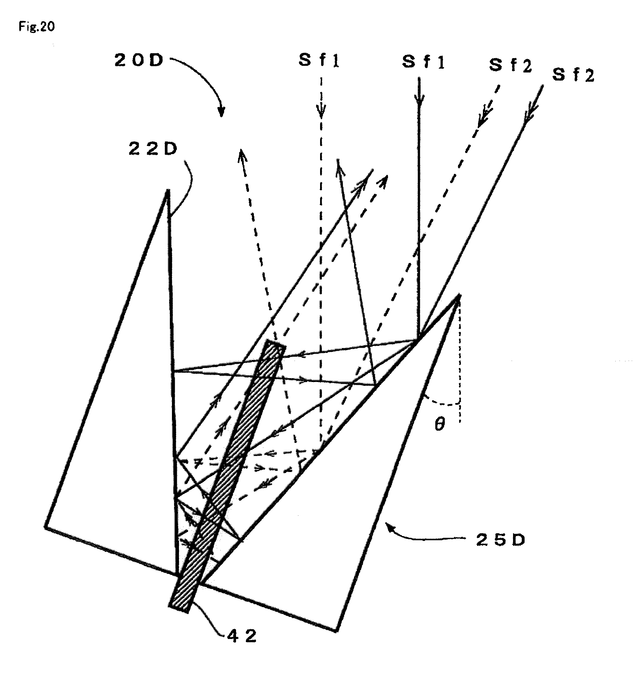

Now, the light path as the light guide 20D of Fig. 9 is inclined will be described.
The light guide 20D shown in Fig. 19 is the one for a slab-shaped laser medium 42. In this case also, when an optical axis of the laser medium 42 is inclined by angle θ with respect to the optical axis of the Fresnel lens, the result similar to the one in Fig. 18 was obtained. Fig. 20 is a schematic diagram showing a relationship between the light path of Fig. 19 and the laser medium. As shown in Fig. 20, it is seen that the solar rays are not likely to gather at an output end of the laser medium 42 and it is possible to uniformly excite the laser medium 42.

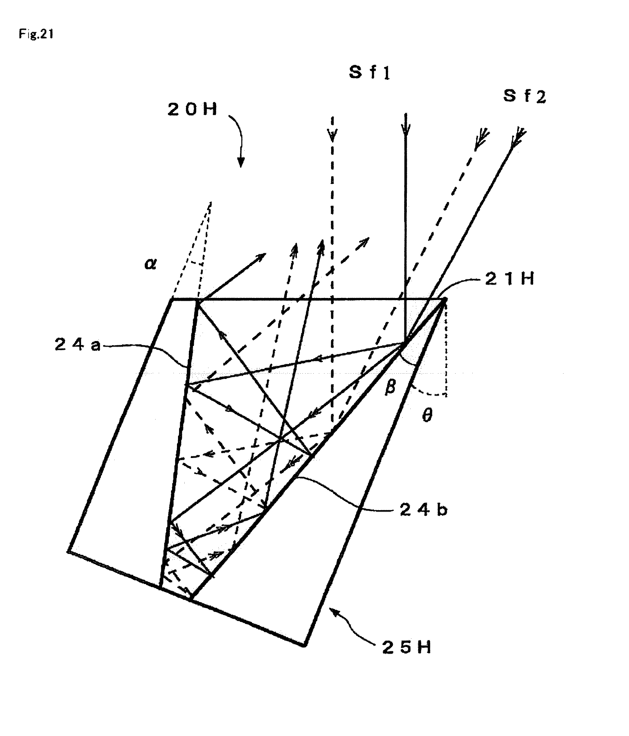

Now, as another modification of the light guide, a light guide having a non-symmetrical reflector will be described. Fig. 21 is a schematic diagram showing light paths in the modification of the light guide of Fig. 19.

As shown in Fig. 21, the light guide 20H is installed with the optical axis 36 of the laser medium 31 being inclined by angle θ (for example, 19.6°) with respect to an optical axis 16 of the Fresnel lens 10. The angle of the reflector 24a is different from that of the reflector 24b with respect to the laser housing 25H. That is, the angle made by an outer wall of the laser housing 25H and the reflector 24a as well as the angle made by the outer wall of the laser housing 25H and the reflector 24b are respectively different from angle α nd angle β (α < β), exhibiting a non-symmetrical form.

Further, as shown in Fig. 21, the solar rays having entered near the central portion of the light incident port of the light guide 20H are reflected on wall surfaces (reflectors 24a and 24b) of the light guide 20H and are focused on the inner portion of the light guide 20H. The light having entered near the end portion of the reflector of the light guide 20H is reflected several times on the upper portion of the light guide 20H and is returned in the light incident direction. That is, by inclining the light guide, it becomes possible to uniformly excite the laser medium. Further, as shown in Fig. 21, by allowing it to be non-symmetrical, the number of reflections inside the light guide 20H is increased regarding the vertical incident light Sf1 which is vertical to the solar-ray entrance window 21H and the oblique incident light Sf2. That is, it becomes possible to increase the absorption of the solar rays in the laser medium.

Further, as light collecting means, besides the Fresnel lens 10, a glass lens or a concave reflective mirror may be employed so long as it can collect the solar rays in the light entrance window of the light guide. Further, a fluorescent material to be added to the Fresnel lens 10 is not limited to rhodamine 6G or DOTCI so long as the material prevents the deterioration caused by the light in an ultraviolet wavelength region of the plastic being a material for the Fresnel lens and can convert the ultraviolet light to an effective exciting light in the visible wavelength region.
Further, the material for the laser medium 31 is not limited to YAG (Y₃Al₅O₁₂), GSGG (Gd₃Ac₂Al₃O₁₂), etc. to which both Nd and Cr, shown as examples, are added. It may be any material so long as it can widely absorb the spectrum component of the solar rays.

Furthermore, the present invention is not limited to the above embodiments. These embodiments are examples and whatever has substantially the same structure and produces the same action effect as the technical spirit described in the claim of the present invention is embraced by the technical scope of the present invention.

### EXPLANATION OF REFERENCE NUMERALS AND SYMBOLS

1, 2, 3: Laser oscillator
10: Flesnel lens
16: Optical axis of Fresnel lens
20, 20B, 20C, 20D, 20E: Light guide
21, 21B: Solar-ray entrance window (Entrance window)
22, 22B, 22C, 22D: Reflector
30: Laser cavity
31, 41, 42, 45: Laser medium
35: Output mirror
36: Optical axis of laser medium
41a, 42a: Slit (Opening)
S, Sf: Solar rays

## Claims

1. A laser oscillator, comprising:
a laser medium excited by solar rays and outputting laser beams;
an output mirror having a concave surface opposed to an output end of the laser medium; and
a light guide having a reflector extending from the output end of the laser medium towards the outside of the laser medium and reflecting the solar rays to guide them to the laser medium.

2. The laser oscillator of claim 1, wherein the reflector of the light guide has a conical surface.

3. The laser oscillator of claim 1 or 2, wherein the laser medium has an opening which extends in a direction of an optical axis of the laser medium.

4. The laser oscillator of any one of claims 1 to 3, wherein there is further provided light collecting means for collecting the solar rays and allowing them to enter the light guide.

5. The laser oscillator of claim 4, wherein the optical axis of the light collecting means is arranged in an inclined manner with respect to the optical axis of the laser medium.

6. The laser oscillator of claim 5, wherein a surface of a light entrance window of the light guide for taking in the solar rays is arranged perpendicularly to the optical axis of the light collecting means.

7. The laser oscillator of any one of claims 4 to 6, wherein the light collecting means is a Fresnel lens and a fluorescent material is added to the Fresnel lens.

8. The laser oscillator of claim 7, wherein the surface quality of the Fresnel lens is treated by deep ultraviolet light.

9. A laser oscillator comprising:
a laser medium excited by solar rays and outputting laser beam,
wherein the laser medium has an opening which extend in a direction of an optical axis of the laser medium.

10. The laser oscillator of claim 9, wherein the opening has a slit.

11. The laser oscillator of claim 9 or 10, wherein the laser medium is formed in a plate-lake shape.

12. A laser oscillator, comprising:
a laser medium excited by solar rays and outputting laser beams;
a light guide having a reflector extending from an output end of the laser medium towards the outside of the laser medium and reflecting the solar rays to guide them to the laser medium; and
light collecting means collecting the solar rays and allowing them to enter the light guide,
wherein an optical axis of the light collecting means is arranged in an inclined manner with respect to an optical axis of the laser medium.
